(19) Europäisches Patentamt / European Patent Office / Office européen des brevets

(11) **EP 3 693 159 B1**

(12) **EUROPEAN PATENT SPECIFICATION**

(45) Date of publication and mention of the grant of the patent:
**10.05.2023 Bulletin 2023/19**

(21) Application number: **18864072.6**

(22) Date of filing: **19.09.2018**

(51) International Patent Classification (IPC):
**B32B 7/02** *(2019.01)*       **B32B 3/26** *(2006.01)*
**B32B 7/12** *(2006.01)*       **B32B 25/04** *(2006.01)*
**B32B 25/08** *(2006.01)*       **B32B 25/16** *(2006.01)*
**C08J 5/18** *(2006.01)*       **F16F 15/00** *(2006.01)*

(52) Cooperative Patent Classification (CPC):
**B32B 3/266; B32B 5/02; B32B 7/02; B32B 7/12;
B32B 25/042; B32B 25/08; B32B 25/10;
B32B 25/14; B32B 25/16; B32B 27/06;
B32B 27/12; C09J 7/24;** B32B 2250/02;
B32B 2250/03; B32B 2250/40;       (Cont.)

(86) International application number:
**PCT/JP2018/034571**

(87) International publication number:
**WO 2019/069684 (11.04.2019 Gazette 2019/15)**

(54) **VIBRATION-CONTROLLING SHEET HAVING NUMEROUS THROUGH-HOLES**

SCHWINGUNGSREGULIERENDE PLATTE MIT ZAHLREICHEN DURCHGANGSLÖCHERN

FEUILLE ANTI-VIBRATIONS DOTÉE D'UNE PLURALITÉ DE TROUS TRAVERSANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.10.2017 JP 2017192360**

(43) Date of publication of application:
**12.08.2020 Bulletin 2020/33**

(73) Proprietor: **KURARAY PLASTICS CO., LTD.
Osaka-shi, Osaka 530-8611 (JP)**

(72) Inventors:
• **MIYAMOTO, Takehiro
Fuwa-gun, Gifu 503-2122 (JP)**
• **KITAMURA, Teruo
Osaka-shi, Osaka 530-8611 (JP)**
• **NAKAMURA, Yoshinori
Osaka-shi, Osaka 530-8611 (JP)**
• **NOSAKA, Yukio
Osaka-shi, Osaka 530-8611 (JP)**

(74) Representative: **Müller-Boré & Partner
Patentanwälte PartG mbB
Friedenheimer Brücke 21
80639 München (DE)**

(56) References cited:
WO-A1-2007/023932       JP-A- H0 343 244
JP-A- H08 258 206       JP-A- 2004 299 273
JP-A- 2006 045 344       JP-A- 2011 111 499
JP-A- 2017 186 535       US-A1- 2003 132 057
US-A1- 2012 164 907

(52) Cooperative Patent Classification (CPC): (Cont.)
B32B 2262/0215; B32B 2270/00; B32B 2274/00;
B32B 2307/51; B32B 2307/56; B32B 2307/732;
B32B 2405/00; C09J 2301/18; C09J 2453/006

**Description**

The present invention relates to a vibration-controlling sheet and, more specifically, to a vibration-controlling sheet minimizing numbness of hands, feet, and a body even when a strong impact is applied as in the case where the sheet is bonded to and used on a grip of sporting goods such as a bat and a tennis racket serving as an object to be bonded.
A thermoplastic elastomer is conventionally known as a polymeric material having rubber elasticity. Particularly, several proposals have been made on thermoplastic elastomer compositions using a hydrogenated product of a vinyl aromatic compound-conjugated diene compound block copolymer (hereinafter, also referred to as a block copolymer hydrogenated product). For example, a thermoplastic elastomer composition which contains a hydrocarbon-based oil and an olefin-based polymer in a block copolymer hydrogenated product is known (Patent Documents 1 and 2).
An adhesive sheet which has a perforated film of a synthetic resin such as polyester or polyurethane coated with an adhesive is known (Patent Documents 3 and 4).
A soundproof sheet which has an adhesive layer disposed on a soundproof sheet with a mesh material laminated thereon as an adhesive force suppressing layer is known (Patent Document 5).
Furthermore, it is known to laminate a double-sided tape obtained by applying an acrylic adhesive to a polyethylene film on a nonwoven fabric (Patent Document 6) excellent in elasticity, sound absorbability, and vibration-controlling properties made of a thermoplastic elastomer that is a block copolymer containing a polymer block composed of a vinyl aromatic monomer and a polymer block composed of a monomer having a conjugated double bond, or a hydrogenated product thereof ([0036] and Examples of Patent Document 6).

Patent Document 1: Japanese Laid-Open Patent Publication No. 50-014742
Patent Document 2: Japanese Laid-Open Patent Publication No. 58-206644
Patent Document 3: Japanese Laid-Open Patent Publication No. 11-148052
Patent Document 4: Japanese Patent Application No. 2016-23521
Patent Document 5: Japanese Laid-Open Patent Publication No. 2001-348540
Patent Document 6: Japanese Laid-Open Patent Publication No. 2014-218764

Furthermore, JP 2011 11 1499 A discloses a vibration insulator for home electric appliance.
Moreover, US 2012/164907 A1 discloses multilayer and composition gradient structures.
In addition, US 2003/132057 A1 discloses a damping foil consisting of several layers and a method for producing the same.
Finally, JP H08 258206 A discloses a laminated structure.
However, even when the thermoplastic elastomer compositions described in Patent Documents 1 to 6 are used as a sheet for sporting goods, it was difficult to obtain sufficient vibration-controlling properties reducing a numbing feeling when a strong impact is applied.
An object of the present invention is to provide a thermoplastic elastomer vibration-controlling sheet minimizing numbness of hands, feet, and a body even when a strong impact is applied as in the case where the sheet is bonded to and used on a grip of sporting goods such as a bat and a tennis racket serving as an object to be bonded.
As a result of intensive studies for achieving the object, the present inventors found the effectiveness of a vibration-controlling sheet using a sheet having numerous through-holes made of a thermoplastic elastomer, or preferably, a specific thermoplastic elastomer, and further having an adhesive on one or both sides of the sheet, thereby completing the present invention.
The present invention is a vibration-controlling sheet comprising: a thermoplastic elastomer sheet having numerous through-holes; and an adhesive layer present on one or both sides of the thermoplastic elastomer sheet, wherein the thermoplastic elastomer sheet has a porosity of 5 to 80 % and a loss factor tan$\delta$ of 0.3 or more at 0 °C and 30 Hz, as measured in accordance with the respective methods specified herein, and wherein the thermoplastic elastomer is

(a) a block copolymer composed of at least two polymer blocks A made up of structural units derived from a vinyl aromatic compound and at least one polymer block B made up of structural units derived from a conjugated diene compound, and/or a hydrogenated product of the block copolymer.

Preferably,

the block copolymer and/or a hydrogenated product of the block copolymer (a) is
(a1) a block copolymer in which a content of 3,4-bond units and 1,2-bond units of structural units derived from isoprene and/or butadiene is 45 mol% or more, and/or a hydrogenated product of the block copolymer.

Preferably,

the block copolymer and/or a hydrogenated product of the block copolymer (a) is made up of
(a1) a block copolymer in which a content of 3,4-bond units and 1,2-bond units of structural units derived from isoprene and/or butadiene is 45 mol% or more, and/or a hydrogenated product of the block copolymer, and
(a2) a block copolymer in which a content of 3,4-bond units and 1,2-bond units of structural units derived from isoprene and/or butadiene is less than 45 mol%, and/or a hydrogenated product of the block copolymer, and wherein a mass ratio of (a1) and (a2) is (al):(a2)=95:5 to 30:70.

Preferably,

the thermoplastic elastomer contains
50 to 300 parts by mass of (b) a hydrocarbon softener, relative to 100 parts by mass of the block copolymer and/or a hydrogenated product of the block copolymer (a).

Preferably,

the thermoplastic elastomer contains
3 to 50 parts by mass of (c) a polyolefin resin, relative to a total of 100 parts by mass of the block copolymer and/or a hydrogenated product of the block copolymer (a) and the hydrocarbon softener (b).

Preferably, the through-holes have an average hole diameter of 0.1 mm to 8 mm.

Preferably, the vibration-controlling sheet is a perforated sheet having a thickness of 0.1 to 7 mm.

The present invention enables provision of the vibration-controlling sheet that minimizes numbness of hands, feet, and a body even when a strong impact is applied as in the case where the sheet is bonded to and used on a grip of sporting goods such as a bat and a tennis racket serving as an object to be bonded, and that preferably has an excellent vibration damping property.

BRIEF DESCRIPTION OF DRAWING

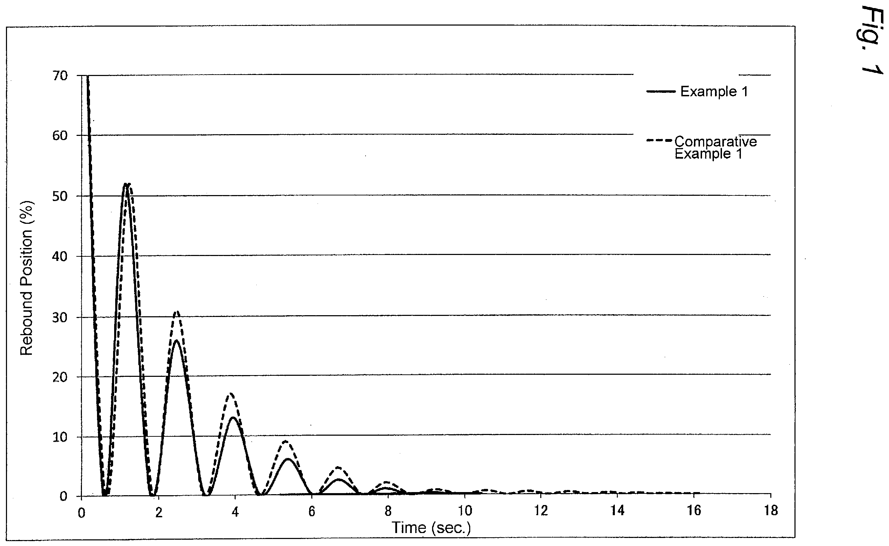

Fig. 1 is a diagram showing results of evaluation of vibration damping properties of samples of sheets obtained in Example 1 and Comparative Example 1.

The present invention relates to a vibration-controlling sheet comprising a thermoplastic elastomer sheet having numerous through-holes and an adhesive layer present on one or both sides of the thermoplastic elastomer sheet, and the thermoplastic elastomer sheet has a porosity of 5 to 80 % and a loss factor tan$\delta$ of 0.3 or more at 0 °C and 30 Hz.

The thermoplastic elastomer constituting the vibration-controlling sheet of the present invention is (a) a block copolymer composed of at least two polymer blocks A made up of structural units derived from a vinyl aromatic compound and at least one polymer block B made up of structural units derived from a conjugated diene compound, and/or a hydrogenated product of the block copolymer.

That is, according to the present invention, the thermoplastic elastomer is a specific block copolymer (a) and/or a hydrogenated product of the block copolymer (a). In this description, such a block copolymer and/or a hydrogenated product of the block copolymer (a) may simply be referred to as "block copolymer (a)". Such a block copolymer (a) will hereinafter be described in detail.

<Block Copolymer (a)>

The block copolymer (a) is a block copolymer composed of at least two polymer blocks A made up of structural units derived from a vinyl aromatic compound and at least one polymer block B made up of structural units derived from at least one conjugated diene compound, and/or a copolymer obtained by hydrogenating the block copolymer (i.e., hydrogenated block copolymer).

Examples of the vinyl aromatic compound comprise styrene, $\alpha$-methylstyrene, o-methylstyrene, m-methylstyrene, p-methylstyrene, 1,3-dimethylstyrene, vinyl naphthalene, vinyl anthracene, etc. Among them, styrene and $\alpha$-methylstyrene are preferable. One of the aromatic vinyl compounds may be used alone, or two or more thereof may be used together.

The content of the vinyl aromatic compound in the block copolymer (a), i.e., the content of all the polymer blocks A, is preferably 5 to 75 mass%, more preferably 5 to 50 mass%.

Examples of the conjugated diene compound comprise butadiene, isoprene, 2,3-dimethyl-1,3-butadiene, 1,3-pentadiene, 1,3-hexadiene, etc. One of the conjugated diene compounds may be used alone, or two or more thereof may be used together. Among them, the conjugated diene compound is preferably at least one selected from isoprene and butadiene and more preferably a combination (mixture) of isoprene and butadiene.

In the block copolymer (a), from the viewpoint of heat resistance and resistance characteristic (light resistance or weather resistance), 50 % or more of carbon-carbon double bonds derived from the conjugated diene compound of the polymer block B is preferably hydrogenated. Such a hydrogenation rate is more preferably 75 % or more, further preferably 95 % or more, particularly preferably 98 % or more. The hydrogenation rate is 100 % or less, usually 99.9 % or less.

The block copolymer (a) contains two or more polymer blocks A and one or more polymer blocks B. A binding mode of the polymer block A and the polymer block B may be linear, branched, or any combination thereof. When the polymer block A is denoted by A and the polymer block B is denoted by B, examples of preferable structure comprise a triblock structure represented by A-B-A and multiblock structures represented by (A-B)n and (A-B)n-A (where n represents an integer of 2 or more). Among them, the triblock structure represented by A-B-A is particularly preferable.

The weight average molecular weight of the block copolymer (a) is preferably in a range of 40,000 to 500,000 from the viewpoint of molding processability and mechanical properties of the obtained vibration-controlling sheet.

The weight average molecular weight as used herein means the weight average molecular weight in terms of standard polystyrene obtained by gel permeation chromatography (GPC) measurement.

Measurement Conditions

GPC: LC Solution (manufactured by SHIMADZU)
Detector: Differential Refractometer RID-10A (manufactured by SHIMADZU)
Column: Two TSKgel G4000Hxl in series (manufactured by TOSOH)
Guard column: TSK guard column Hx1-L (manufactured by TOSOH)
Solvent: tetrahydrofuran
Temperature: 40 °C
Flow rate: 1 ml/minute
Concentration: 2 mg/ml

In an embodiment of the present invention, the block copolymer (a) is preferably (a1) described below:
(a1) a block copolymer that is composed of at least two polymer blocks A made up of structural units derived from a vinyl aromatic compound and at least one polymer block B made up of structural units derived from a conjugated diene compound and in which a content of 3,4-bond units and 1,2-bond units of structural units derived from isoprene and/or butadiene is 45 mol% or more, and/or a hydrogenated product of the block copolymer.

Therefore, in the embodiment of the present invention, the block copolymer and/or a hydrogenated product of the block copolymer (a) is
(a1) a block copolymer in which a content of 3,4-bond units and 1,2-bond units of structural units derived from isoprene and/or butadiene is 45 mol% or more, and/or a hydrogenated product of the block copolymer.

In an embodiment of the present invention, the block copolymer (a) is preferably a combination of (a1) described above and (a2) described below:

(a2) a block copolymer that is composed of at least two polymer blocks A made up of structural units derived from a vinyl aromatic compound and at least one polymer block B made up of structural units derived from a conjugated diene compound and in which a content of 3,4-bond units and 1,2-bond units of structural units derived from isoprene and/or butadiene is less than 45 mol%, and/or a hydrogenated product of the block copolymer, wherein a mass ratio of (a1) and (a2) is (a1):(a2)= 95: 5 to 30:70.

Therefore, in the embodiment of the present invention, the block copolymer and/or a hydrogenated product of the block copolymer (a) is preferably made up of

(a1) a block copolymer in which a content of 3,4-bond units and 1,2-bond units of structural units derived from isoprene and/or butadiene is 45 mol% or more, and/or a hydrogenated product of the block copolymer, and
(a2) a block copolymer in which a content of 3,4-bond units and 1,2-bond units of structural units derived from isoprene and/or butadiene is less than 45 mol%, and/or a hydrogenated product of the block copolymer, wherein a mass ratio of (a1) and (a2) is (a1):(a2)=95:5 to 30:70.

The mass ratio (a1):(a2) of (a1) and (a2) is preferably 90:10 to 40:60, more preferably 85:15 to 50:50, more preferably 80:20 to 60:40.

The polymer block B in the block copolymer (a1) is preferably made up of structural units derived from isoprene alone or a combination (mixture) of isoprene and butadiene from the viewpoint of obtaining the vibration-controlling sheet intended in the present invention. In this description, the 3,4-bond units and the 1,2-bond units in the structural units derived from isoprene, and the 1,2-bond units in the structural units derived from butadiene are all referred to as vinyl bond units, and a total amount thereof is referred to as a vinyl bond content. Preferably, the vinyl bond content of the polymer block B in the block copolymer is 45 mol% or more, further preferably 47 mol% or more, and most preferably 50 mol% or more. An upper limit of the vinyl bond content of the polymer block B in the block copolymer is usually 80 mol%.

In the embodiment, in (a2) composed of a block copolymer and/or a hydrogenated product of the block copolymer used in combination with (a1) described above, the content of 3,4-bond units and 1,2-bond units of structural units derived from isoprene and/or butadiene is less than 45 mol%, preferably 43 mol% or less, most preferably 40 mol% or less. A lower limit of the content is usually 8 mol% or more, preferably 10 mol% or more.

The aromatic compound content, weight average molecular weight, and hydrogenation rate of the block copolymer (a1) and the block copolymer (a2) are the same as those of the block copolymer (a) described above.

The block copolymer and/or a hydrogenated product of the block copolymer (a) in the present invention, or particularly, the block copolymer (a1) and the block copolymer (a2) can be obtained by using methods exemplified below, which are described in, for example, Japanese Laid-Open Patent Publication No. 2014-218764 and WO 2011/040586; however, the present invention is not particularly limited to these methods.

For example, the block copolymer (a) can be manufactured by a polymerization method such as an ionic polymerization method using anionic polymerization or cationic polymerization, a single-site polymerization method, or a radical polymerization method. In the case of the anionic polymerization method, for example, an aromatic vinyl compound and isoprene (or a mixture of isoprene and butadiene) are sequentially polymerized by using an alkyllithium compound etc. as a polymerization initiator in an organic solvent inert to a polymerization reaction of n-hexane, cyclohexane or the like so as to manufacture a block copolymer having a desired molecular structure and molecular weight, and the polymerization can then be stopped by adding an active hydrogen compound such as alcohols, carboxylic acids, and water so as to manufacture the block copolymer. The polymerization is usually performed at a temperature of 0 to 80 °C for 0.5 to 50 hours.

The hydrogenated block copolymer (a) can be obtained by performing a hydrogenation reaction in the presence of a catalyst for hydrogenation in an organic solvent inert to the polymerization reaction after isolation of the block copolymer obtained by the method described above or, preferably, without isolation of the block copolymer.

When an alkyllithium compound is used as a polymerization initiator, examples of such an alkyl lithium compound comprise alkyl lithium compounds with an alkyl residue having the carbon number of 1 to 10. Among them, methyl lithium, ethyl lithium, butyl lithium, and pentyl lithium are particularly preferred. An amount of the initiator such as these alkyl lithium compounds to be used is preferably about 0.01 to 0.2 parts by mass relative to 100 parts by mass of all the monomers used for the polymerization.

To set the content of 3,4-bond units and/or 1,2-bond units derived from isoprene or a combination of isoprene and butadiene to a desired content in the block copolymers (a1) and (a2), a Lewis base is preferably used as a co-catalyst during the polymerization. Examples of the Lewis base comprise: ethers such as dimethyl ether, diethyl ether, tetrahydrofuran (THF) and dioxane; glycol ethers such as ethylene glycol dimethyl ether and diethylene glycol dimethyl ether; amine-based compounds such as triethylamine, N,N,N',N'-tetramethylethylenediamine (TMEDA), and N-methylmorpholine; nitrogen-containing heterocyclic aromatic compounds such as pyridine; sulfoxides such as dimethyl sulfoxide; and ketones such as acetone and methylethylketone. One of these Lewis bases may be used alone, or two or more thereof may be used together. Among them, for the Lewis base, the ethers and amine-based compounds are preferable, and THF and TMEDA are more preferable.

An amount of the Lewis base to be used is preferably about 0.1 to 1000 mol, more preferably 0.1 to 100 mol, and further preferably 1 to 100 mol, per 1 mol of lithium atoms of the alkyllithium compound. By appropriately adjusting the amount within this range, the vinyl bond content can optionally be controlled so as to obtain the block copolymers in which the content of 3,4-bond units and/or 1,2-bond units is 45 mol% or more, or the content thereof is less than 45 mol%.

The block copolymer (a1) or a combination of (a1) and (a2) as described above has a bulky structure since the polymer block composed of a conjugated diene compound has many branches. Therefore, in the vibration-controlling sheet of the present invention, when a vibration energy is applied thereto, a probability collision between molecules increases, so that the vibration energy is efficiently converted into heat energy. Thus, the numbness of hands, feet, and a body is minimized even when a strong impact is applied as in the case where the sheet is bonded to and used on a grip of sporting goods such as a bat and a tennis racket serving as an object to be bonded.

The sheet having numerous through-holes obtained from the thermoplastic elastomer described above is characterized in that the loss factor $\tan\delta$ at 0 °C and 30 Hz is 0.3 or more. Such a characteristic is one of the important characteristics for achieving the object of the present invention. The loss factor $\tan\delta$ is preferably 0.4 or more, and most preferably 0.5 or more. A thermoplastic elastomer having a loss factor $\tan\delta$ of less than 0.3 and an ordinary synthetic resin cannot achieve the object of the present invention as is apparent from Comparative Examples 1 to 5 described later. The loss factor tanδ is a value measured by using a dynamic viscoelasticity measuring apparatus at a frequency of 30 Hz and a temperature of 0 °C, and the details of the measurement method will be described later in Examples. Although not particularly limited, the upper limit of the loss factor tanδ is usually 10 or less, preferably 5 or less.

A hydrocarbon softener (b) suitably contained in the thermoplastic elastomer in an embodiment of the present invention will be described.

<Hydrocarbon Softener (b)>

Examples of the hydrocarbon softener (b) usable in an embodiment of the present invention comprise hydrocarbon softeners such as process oils, such as paraffinic oil, naphthenic oil, and aromatic oil, and liquid paraffin, and among them, process oils such as paraffin oil and naphthene oil are preferable. One of them can be used alone, or two or more can be used together.

The thermoplastic elastomer in the present invention preferably contains 50 to 300 parts by mass of the hydrocarbon softener (b) relative to 100 parts by mass of the block copolymer (a). The content of the hydrocarbon softener is more preferably 60 to 200 parts by mass, further preferably 60 to 150 parts by mass.

A polyolefin resin (c) suitably contained in the thermoplastic elastomer in an embodiment of the present invention will be described.

<Polyolefin Resin (c)>

In an embodiment of the present invention, the thermoplastic elastomer preferably contains the polyolefin resin (c) so as to achieve the object of the present invention at a higher level. Examples of such a polyolefin resin (c) comprise propylene polymers and ethylene polymers. For the propylene polymers, for example, homopolypropylene, random polypropylene, block polypropylene, atactic polypropylene, and syndiotactic polypropylene are usable. Among them, random polypropylene and block polypropylene are preferably used. Examples of usable ethylene polymers comprise ethylene homopolymers such as medium-density polyethylene, low-density polyethylene (LDPE), and high-density polyethylene (HDPE); and ethylene/$\alpha$-olefin copolymers such as ethylene/1-butene copolymer, ethylene/1-hexene copolymer, ethylene/1-heptene copolymer, ethylene/1-octene copolymer, ethylene/4-methyl-1-pentene copolymer, ethylene/1-nonene copolymer, and ethylene/1-decene copolymer.

The content of the polyolefin resin (c) is preferably 3 to 50 parts by mass, more preferably 5 to 20 parts by mass, relative to a total of 100 parts by mass of the components (a) and (b).

<Polyphenylene Ether Resin>

For the purpose of improving a compression set resistance at high temperature, a polyphenylene ether resin can further be contained in the thermoplastic elastomer. Specific examples comprise poly(2,6-dimethyl-1,4-phenylene ether), poly(2-methyl-6-ethyl-1,4phenylene ether), poly(2,6-diphenyl-1,4-phenylene ether), poly(2-methyl-6-phenyl-1,4-phenylene ether), and poly(2,6-dichloro-1,4-phenylene ether). A polyphenylene ether copolymer such as a copolymer of 2,6-dimethylphenol and a monovalent phenol (e.g., 2,3,6-trimethylphenol or 2-methyl-6-butylphenol) is also usable. Among them, poly(2,6-dimethyl-1,4-phenylene ether) and a copolymer of 2,6-dimethylphenol and 2,3,6-trimethylphenol are preferable, and poly(2,6-dimethyl-1,4-phenylene ether) is more preferable.

The content of the polyphenylene ether resin is preferably 0.01 to 3 parts by mass, more preferably 0.05 to 1 part by mass, relative to 100 parts by mass of the thermoplastic elastomer.

Various additives can be contained in the thermoplastic elastomer constituting the vibration-controlling sheet of the present invention. Examples of such additives comprise scaly inorganic additives such as clay, diatomaceous earth, silica, talc, barium sulfate, calcium carbonate, magnesium carbonate, metal oxides, mica, graphite, and aluminum hydroxide, various metal powders, wood chips, glass powders, ceramic powders, granular or powdered solid fillers such as granular or powdered polymers, various other natural or artificial short and long fibers (e.g., straw, hair, glass fibers, metal fibers, other various polymer fibers), etc.

A hollow filler, for example, an inorganic hollow filler such as glass balloons and silica balloons, and an organic hollow filler made of polyvinylidene fluoride, polyvinylidene fluoride copolymer can be contained for weight reduction of the vibration-controlling sheet.

The thermoplastic elastomer may contain, in addition to the components described above, various antiblocking agents, heat stabilizers, antioxidants, light stabilizers, ultraviolet light absorbers, lubricants, crystal nucleating agents, foaming agents, colorants, etc. depending on application. Example of the antioxidants comprise phenolic antioxidants, phosphite antioxidants, and thioether antioxidants such as 2,6-di-tert-butyl-p-cresol, 2,6-di-tert-butylphenol, 2,4-dimethyl-6-tert-butylphenol, 4,4'-dihydroxydiphenyl, tris(2-methyl-4-hydroxy-5-tert-butylphenyl)butane, tetrakis[methylene-3-(3,5-di-tert-butyl-4-hydroxyphenyl)propionate]methane, and 3,9-bis{2-[3-(3-tert-butyl-4-hydroxy-5-methylphenyl)propionyloxy]-1,1-dimethylethyl}-2,4,8,10-tetraoxaspiro-5,5-undecane. Among them, phenolic antioxidants and phosphite antioxidants are particularly preferable. The content of the antioxidant is preferably 0.01 to 3 parts by mass, more preferably 0.05 to 1 parts by mass, relative to the total amount of the thermoplastic elastomer composition (A), or specifically, relative to a total of 100 parts by mass of the components (a) to (c) contained in the thermoplastic elastomer of the present invention.

In the present invention, the block copolymer or a hydrogenated product thereof described above is optimum for the thermoplastic elastomer; however, other thermoplastic elastomers can be used in combination. Examples of such other thermoplastic elastomers comprise thermoplastic elastomers such as acrylic elastomers, polyester elastomers, polyolefin elastomers, and polyamide elastomers, and those having the loss factor tan$\delta$ of the sheet of 0.3 or more are usable.

One important characteristic of a thermoplastic elastomer sheet constituting the vibration-controlling sheet of the present invention is that the sheet has numerous through-holes.

Examples of such a sheet having numerous through-holes comprise a so-called perforated sheet and a porous sheet. Examples of the perforated sheet comprise a sheet, a mesh sheet, a knitted sheet, etc. obtained by forming holes by punching etc. in a sheet (or film), a woven fabric, a nonwoven fabric, etc. without holes. Examples of the porous sheet comprise a porous membrane having a relatively large hole diameter. In any case, it is important that numerous holes are disposed to penetrate through the front and back of the sheet. The size of the holes is preferably uniform. Among these sheets having numerous through-holes, perforated sheets are more suitable for achieving the object of the present invention. The thickness of the vibration-controlling sheet of the present invention, particularly the perforated sheet, is preferably 0.1 mm (100 $\mu$m) to 7 mm, more preferably 0.2 mm (200 $\mu$m) to 5 mm.

The vibration-controlling sheet of the present invention has numerous through-holes, and the porosity thereof is 5 to 80 %. The porosity is preferably 10 to 70 %, more preferably 20 to 60 %. The porosity is obtained in accordance with a measurement method described in examples described later.

The average hole diameter of the through-holes is preferably 0.1 mm (100 $\mu$m) to 8 mm, more preferably 0.3 mm (300 $\mu$m) to 6 mm, further preferably 0.5 mm (500 $\mu$m) to 5 mm. The average hole diameter is an average value of the shortest diameter and the longest diameter of holes.

The thermoplastic elastomer constituting the sheet having numerous through-holes of the present invention (which may be a resin composition of a thermoplastic elastomer) is manufactured in accordance with a usual method of manufacturing a resin composition or manufacturing an elastomer composition. In this case, for example, a method of uniformly mixing the components by using a melt kneader such as a single-screw extruder, a twin-screw extruder, a Banbury mixer, a heating roll, and various kneaders can be used. The set temperature of the extruder can optionally be selected from 150 °C to 300 °C.

From the melt-kneaded material thus obtained, a sheet having numerous through-holes can be manufactured by using a known method. For example, a sheet having a desired porosity and average hole diameter can be obtained by a method of extruding a melt-kneaded material on a roll having unevenness, a method of punching a sheet obtained by extruding a melt-kneaded material into a sheet shape, and a method of extruding a melt-kneaded material into a fiber shape to form a mesh or knit-fabric sheet. Furthermore, an intended sheet can be obtained by a method of producing a porous separation membrane etc. Among these methods, particularly, obtaining a sheet obtained by a punching method is more suitable for achieving the object of the present invention.

Examples of a method of obtaining a sheet by a punching method comprise a method of forming a film or a sheet from the thermoplastic elastomer or the resin composition to obtain a sheet having numerous through-holes by various punching methods, or a method of using a woven or nonwoven fabric prepared from the thermoplastic elastomer or the resin composition to obtain a sheet having numerous through-holes by various punching methods.

An extremely important characteristic of the vibration-controlling sheet of the present invention is that the sheet is formed as an adhesive sheet having an adhesive (adhesive layer) on one or both sides of the sheet having numerous through-holes. This point will hereinafter be described.

<Adhesive (Adhesive Layer)>

Examples of a method of obtaining such an adhesive sheet comprise a method of applying (or affixing) a tape provided with an adhesive on one or both sides onto a sheet having numerous through-holes, and a method of applying an adhesive onto a sheet having numerous through-holes or impregnating the sheet with an adhesive. Among these methods, a method of applying (or affixing) a double-sided tape provided with an adhesive onto a sheet is preferable. Since the sheet having numerous through-holes is opened in the through-holes to form openings, the adhesive on one or both sides is also present inside the sheet through the openings, which allows the sheet to firmly adhere. Particularly, when the adhesive layers are present on both sides of the sheet, the adhesive present on both sides is easily present inside the sheet through the openings, which allows the sheet to firmly adhere. In this case, since the adhesives present on both sides of the sheet further firmly adhere to each other, the sheet can more firmly adhere. Therefore, for example, even when a particularly strong impact is applied, the sheet having numerous through-holes and the adhesive are not displaced. The vibration-controlling sheet of the present invention has excellent adhesiveness due to a synergistic effect of the numerous through-holes disposed in the sheet and the presence of the adhesive layer on one or both sides of the sheet and is useful as a member suitable for a grip material etc. particularly minimizing numbness of hands.

Regarding the adhesive, an adhesive having a viscosity of 100 to 15000 mPa·s (25 °C) is preferable for achieving the object of the present invention and is also preferable since the adhesive easily passes through the through-holes of the sheet having numerous through-holes and gives firmer adhesion. A viscosity of 500 to 7000 mPa·s is more preferable. As used herein, the adhesive refers to an adhesive having both properties of liquid and solid and always stable in a wet state, unlike an adhesive being liquid before use and becoming solid after use.

Specific examples of the adhesive satisfying such properties comprise adhesives such as an acrylic resin, a silicone resin, a rubber resin, and a urethane resin. Among them, the acrylic resin has similar flexibility and favorable affinity to the thermoplastic elastomer described above, particularly, polystyrene elastomer, and is therefore preferable.

The acrylic resin is preferably an acrylic polymer containing at least one acrylate and/or methacrylate having an alkyl group having the carbon number of 1 to 14 (hereinafter also referred to as (meth)acrylate). The acrylic polymer preferably contains, as a monomer component, 50 mass% to 100 mass% of (meth)acrylate having an alkyl group having the carbon number of 1 to 14.

Examples of the (meth)acrylate having an alkyl group having the carbon number of 1 to 14 comprise methyl (meth)acrylate, ethyl (meth)acrylate, n-butyl (meth)acrylate, t-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, n-tetradecyl (meth)acrylate, etc. These (meth)acrylates may be used alone or in combination of two or more.

Among them, the (meth)acrylate having an alkyl group having the carbon number of 1 to 14 such as butyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, and n-tetradecyl (meth)acrylate is preferably contained as a monomer component.

The acrylic polymer may contain any other appropriate monomer component in addition to the (meth)acrylate having an alkyl group having the carbon number of 1 to 14. Examples of other monomer components comprise monomer components contributable to an improvement in cohesion and heat resistance, such as sulfonic acid group-containing monomers, phosphoric acid group-containing monomers, cyano group-containing monomers, vinyl esters, and aromatic vinyl compounds, and monomer components having functional groups improving adhesive strength or serving as a cross-linking base point, such as carboxyl group-containing monomers, acid anhydride group-containing monomers, hydroxyl group-containing monomers, amide group-containing monomers, amino group-containing monomers, epoxy group-containing monomers, N-acryloylmorpholine, and vinyl ethers. Such other monomer components may be used alone or in combination of two or more.

Examples of the sulfonic acid group-containing monomers comprise styrene sulfonic acid, allyl sulfonic acid, 2-(meth)acrylamido-2-methylpropanesulfonic acid, (meth)acrylamidepropanesulfonic acid, sulfopropyl (meth)acrylate, (meth)acryloyloxynaphthalenesulfonic acid, etc. Examples of the phosphoric acid group-containing monomers comprise 2-hydroxyethylacryloyl phosphate. Examples of the cyano group-containing monomers comprise acrylonitrile. Examples of the vinyl esters comprise vinyl acetate. Examples of the aromatic vinyl compounds comprise styrene.

Examples of the carboxyl group-containing monomers comprise (meth)acrylic acid, carboxyethyl (meth)acrylate, carboxypentyl (meth)acrylate, itaconic acid, maleic acid, fumaric acid, crotonic acid, etc. Examples of the acid anhydride group-containing monomers comprise maleic anhydride, itaconic anhydride, etc. Examples of the hydroxyl group-containing monomers comprise 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl) methyl acrylate, N-methylol (meth)acrylamide, vinyl alcohol, allyl alcohol, 2-hydroxyethyl vinyl ether, 4-hydroxybutyl vinyl ether, diethylene glycol monovinyl ether, etc. Examples of the amide group-containing monomers comprise acrylamide, diethylacrylamide, etc. Examples of the amino group-containing monomers comprise N,N-dimethylaminoethyl (meth)acrylate, N,N-dimethylaminopropyl (meth)acrylate, etc. Examples of the epoxy group-containing monomers comprise glycidyl (meth)acrylate, allyl glycidyl ether, etc. Examples of the vinyl ethers comprise vinyl ethyl ether etc.

For example, such other monomer components are used such that the obtained acrylic polymer has Tg of 0 °C or less for ease of adjustment of the adhesive strength. For example, the acrylic polymer preferably has Tg of -100 °C or higher.

The weight average molecular weight of the acrylic polymer is preferably 100,000 or more.

The acrylic polymer is obtained by any appropriate polymerization method. Examples of the method comprise polymerization methods generally used as a method of synthesizing an acrylic polymer, such as solution polymerization, emulsion polymerization, bulk polymerization, and suspension polymerization.

The adhesive may comprise a resin other than the resins described above. Examples of other resins comprise polyether resins, modified polyether resins, epoxy resins, etc. When another resin is contained, the content percentage of the other resin is preferably 20 mass% or less.

The adhesive may comprise any appropriate additives other than the resin component. Examples of such additives comprise cross-linkers, coupling agents, tackifiers, surface lubricants, leveling agents, surfactants, antistats, slipperiness improvers, wettability improvers, antioxidants, corrosion inhibitors, light stabilizers, ultraviolet absorbers, polymerization inhibitors, cross-linking accelerators, cross-linking catalysts, inorganic or organic fillers, powders such as metal powders and pigments, particles, foils, etc.

Any appropriate cross-linkers can be used as the cross-linkers, and examples thereof comprise isocyanate compounds, epoxy compounds, aziridine compounds, and melamine compounds. The cross-linkers may be used alone or in combination of two or more.

The content of the cross-linker is preferably 0.1 to 15 parts by mass, more preferably 2 to 10 parts by mass, relative to 100 parts by mass of the resin component.

Coating or impregnation of the sheet having numerous through-holes with the adhesive may be performed by any appropriate method. For example, examples of the coating or impregnating method comprise roll coating methods such as reverse coating and gravure coating, spin coating methods, screen coating methods, fountain coating methods, dipping methods, and spraying methods. Although one or both sides of the sheet are coated or impregnated with the adhesive, both sides are preferably coated or impregnated. The thickness of the adhesive layer present on the sheet (the thickness on one side or the total thickness on both sides) is preferably 20 μm to 3 mm, more preferably 50 μm to 2 mm.

When the vibration-controlling sheet having numerous through-holes obtained in this way is used, usually, a skin material or an exterior material made of leather, synthetic leather, resin, etc. is laminated on one of the adhesive surfaces (the surface on the side brought into contact with the body such as hands), and various objects to be bonded are bonded to the other adhesive surface. Examples of the synthetic leather comprise vinyl chloride leather and thermoplastic polyurethane (TPU) leather, and examples of the resin comprise various resins such as polyolefin resin, polyvinyl chloride resin, polyester resin, polyamide resin, and polyacryl resin, various rubbers, and various thermoplastic elastomers. Preferable examples of the objects to be bonded comprise sporting goods such as grip materials used for metal or wooden bats for baseball, tennis rackets, etc. Other Examples of the objects to be bonded comprise shoe sole materials, medical clothing such as corsets, and innerwear such as brassieres.

The vibration-controlling sheet of the present invention can be formed into any shape in accordance with an object to be bonded.

Examples

The present invention will hereinafter more specifically be described with examples; however, the present invention is not limited thereto in any way. The physical property values of the following examples and comparative examples were evaluated by methods described below.

(1) Measurement of Loss Factor (tanδ)

The value of the loss factor (tanδ) at a frequency of 30 Hz and a temperature of 0 °C was obtained by using a dynamic viscoelasticity measuring apparatus.

> Model: Rheogel-E4000
> Measurement method: dynamic viscoelastic modulus measurement (sine wave)
> Measurement mode: temperature dependence
> Chuck: tensile
> Waveform: sine wave
> Sample shape: 4.90 mm-wide, 0.3 mm-thick, 15 mm-long sheet (before coated with adhesive)

(2) Measurement of Porosity

After a 10 cm×10 cm (porous) sheet was copied to A4 size at the magnification of 400 % by using a copier (IPSio0 SP6310 RPCS type manufactured by Ricoh Co., Ltd.) to measure a weight (W1 [g]) of the copy sheet with the portion other than the (porous) sheet removed, all the portions of the copy sheet corresponding to openings were cut out to measure a weight (W2 [g]) of the copy sheet after the cutting-out, and the porosity (%) was calculated according to the following equation:

$$\text{Porosity (\%)} = [(W1 - W2)/W1] \times 100.$$

(3) Numbing Feeling of Hands (Sensory Test)

Two persons with experience of baseball used ball game bats (product name: Skybeat 31K manufactured by SSK) with a grip tape wound therearound to hit 20 balls for sensory evaluation of numbing feeling of hands when a hitting position was off the center of the bat.

In this test, a measurement sample described in the following "Rebound Resilience (vibration damping property)" was used as a grip tape and wound clockwise, after release paper is peeled off, around the ball game bat for a length of about 20 cm such that the tape forms 1 to 2 mm of overlap.

1. A significantly severe numbness feeling exists.
2. A significant numbness feeling exists.
3. A slight numbness feeling exists.
4. Almost no numbness feeling exists.
5. No numbness feeling exists.

(4) Rebound Resilience (vibration damping property)

The following measurement sample (25 cm-wide, 1.5 cm-thick, 15 cm-long) was fabricated by laminating (a) to (d) in this order, and a pendulum test was performed according to JIS K6255: 2013 by using a Lupke type rebound resilience tester. The rebound resilience (vibration damping property) was evaluated by measuring a time from the start of measurement to the stop of the pendulum.

Fig. 1 shows an example of an elastic modulus/time chart until the stop of the pendulum.

(a) Skin material (urethane synthetic leather manufactured by Kyowa Life Techno Co., Ltd.)
(b) Double-sided adhesive tape (product name: No. 53100, manufactured by Nitto Denko Corporation)
(c) Elastomer sheet
(d) Double-sided adhesive tape/release paper (product name: No. 53100, manufactured by Nitto Denko Corporation)

A shorter time until the stop of the pendulum means a more excellent vibration damping property.

(5) Adhesiveness to Object to Be Bonded

The following measurement sample (25 cm-wide, 1.5 cm-thick, 15 cm-long) was fabricated by laminating (a) to (d) in this order, and the adhesiveness to an object to be bonded was evaluated by measuring a 180° peel strength between (b) and (c) at a tensile speed of 100 mm/min with AG-I tensile tester manufactured by Shimadzu.

(a) Skin material (urethane synthetic leather manufactured by Kyowa Life Techno Co., Ltd.)
(b) Double-sided adhesive tape (product name: No. 53100, manufactured by Nitto Denko Corporation)
(c) Elastomer sheet
(d) Double-sided adhesive tape/release paper (product name: No. 53100, manufactured by Nitto Denko Corporation)

<Preparation of Block Copolymer (al)>

Components (a1-1), (a1-2), and (a1-3) were prepared for the block copolymer (a1) by the method described below.

Component (a 1-1)

Type: Hydrogenated block copolymer of styrene-isoprene-styrene-type triblock copolymer [Styrene content: 20 mass%, Weight average molecular weight: 100,000, Content of 3,4-bond units and 1,2-bond units of structural units derived from isoprene and/or butadiene: 60 mol%]

Preparation:
Into a pressure-resistant container purged with nitrogen and dried, 64 L of cyclohexane serving as a solvent and 0.20 L of sec-butyllithium (10 mass% cyclohexane solution) serving as an initiator are charged, and 0.3 L of tetrahydrofuran serving as an organic Lewis base (equivalent to 15 times in the stoichiometric ratio with respect to lithium atoms in the initiator). After the temperature was raised to 50 °C, 2.3 L of styrene was added and polymerized for 3 hours, 23 L of isoprene was subsequently added and polymerized for 4 hours, and 2.3 L of styrene was further added and polymerized for 3 hours. An obtained reaction solution was poured into 80 L of methanol, and a precipitated solid was separated by filtration and dried at 50 °C for 20 hours to obtain a triblock copolymer composed of polystyrene-polyisoprene-polystyrene.

Subsequently, 10 kg of the triblock copolymer composed of polystyrene-polyisoprene-polystyrene was dissolved in 200 L of cyclohexane, and palladium carbon (supported amount of palladium: 5 mass%) was added as a hydrogenation catalyst at 5 mass% to the copolymer and reacted for 10 hours under the conditions of the hydrogen pressure of 2 MPa and 150 °C. After radiational cooling and pressure discharge, the palladium carbon was removed by filtration, and the filtrate was concentrated and further vacuum-dried to obtain a hydrogenated product of the triblock copolymer composed of polystyrene-polyisoprene-polystyrene.

Component (a1-2)

Type: hydrogenated block copolymer of styrene-isoprene-styrene-type triblock copolymer
[Styrene content: 30 mass%, Weight average molecular weight: 290000, Content of 3,4-bond units and 1,2-bond units of structural units derived from isoprene and/or butadiene: 55 mol%]

Preparation:

Into a pressure-resistant container purged with nitrogen and dried, 1.84 kg of styrene and 55.8 kg of cyclohexane serving as a solvent were charged. To this solution, 45 ml of sec-butyllithium (10 mass%, cyclohexane solution) was added as an initiator and polymerized at 60 °C for 1 hour. Subsequently, after adding 305 g of tetrahydrofuran as a Lewis base to this reaction mixture, 8.57 kg of isoprene was added and polymerized for 2 hours, and 1.84 kg of styrene was further added and polymerized for 1 hour to obtain a polystyrene-polyisoprene-polystyrene triblock copolymer. Subsequently, palladium carbon (supported amount of palladium: 5 mass%) was added as a hydrogenation catalyst at 5 mass% to the triblock copolymer composed of polystyrene-polyisoprene-polystyrene to perform a hydrogenation reaction for 5 hours under the conditions of the hydrogen pressure of 2 MPa and 150 °C. After radiational cooling and pressure discharge, the palladium carbon was removed by filtration, and the filtrate was concentrated and further vacuum-dried to obtain a hydrogenated product of the triblock copolymer composed of polystyrene-polyisoprene-polystyrene.

Component (a1-3)

Type: Styrene-isoprene-styrene-type triblock copolymer
[Styrene content: 20 mass%, Weight average molecular weight: 100,000, Content of 3,4-bond units and 1,2-bond units of structural units derived from isoprene and/or butadiene: 56 mol%]

Preparation:

Into a pressure-resistant container purged with nitrogen and dried, 64 L of cyclohexane serving as a solvent and 0.20 L of sec-butyllithium (10 mass% cyclohexane solution) serving as an initiator are charged, and 0.3 L of tetrahydrofuran serving as an organic Lewis base (equivalent to 15 times in the stoichiometric ratio with respect to lithium atoms in the initiator). After the temperature was raised to 50 °C, 2.3 L of styrene was added and polymerized for 3 hours, 23 L of isoprene was subsequently added and polymerized for 4 hours, and 2.3 L of styrene was further added and polymerized for 3 hours. An obtained reaction solution was poured into 80 L of methanol, and a precipitated solid was separated by filtration and dried at 50 °C for 20 hours to obtain a triblock copolymer composed of polystyrene-polyisoprene-polystyrene.

Subsequently, 10 kg of the triblock copolymer composed of polystyrene-polyisoprene-polystyrene was dissolved in 200 L of cyclohexane, and palladium carbon (supported amount of palladium: 5 mass%) was added as a hydrogenation catalyst at 5 mass% to the copolymer and reacted for 10 hours under the conditions of the hydrogen pressure of 2 MPa and 150 °C. After radiational cooling and pressure discharge, the palladium carbon was removed by filtration, and the filtrate was concentrated and further vacuum-dried to obtain a hydrogenated product of the triblock copolymer composed of polystyrene-polyisoprene-polystyrene.

<Preparation of Block Copolymer (a2)>

Components (a2-1) and (a2-2) were prepared for the block copolymer (a2) by the method described below.

Component (a2-1)

Type: Hydrogenated block copolymer of styrene-isoprene/butadiene-styrene-type triblock copolymer [Styrene content: 30 mass%, Weight-average molecular weight: 270000, Content of 3,4-bond units and 1,2-bond units of structural units derived from isoprene and/or butadiene: 8 mol%]

Preparation:

Into a pressure-resistant container purged with nitrogen and dried, 55.8 kg of cyclohexane serving as a solvent, 53 ml of sec-butyllithium (10 mass%, cyclohexane solution) serving as an initiator, 1.59 kg of styrene as a monomer to be polymerized without adding a Lewis base, 7.44 kg of a mixture of isoprene and butadiene [isoprene/butadiene=55/45 (molar ratio)], and 1.59 kg of styrene were successively added and polymerized to obtain a polystyrene-poly(isoprene/butadiene)-polystyrene triblock copolymer. Palladium carbon (supported amount of palladium: 5 mass%) was added as a hydrogenation catalyst at 5 mass% to the copolymer to perform a hydrogenation reaction for 5 hours under the conditions of the hydrogen pressure of 2 MPa and 150 °C, which was followed by removal of the catalyst and drying to obtain a hydrogenated product of the polystyrene-poly(isoprene/butadiene)-polystyrene triblock copolymer.

Component (a2-2)

Type: Hydrogenated block copolymer of styrene-butadiene-styrene-type triblock copolymer [Styrene content: 34 mass%, Weight average molecular weight: 260000, Content of 3,4-bond units and 1,2-bond units of structural units derived from isoprene and/or butadiene: 40 mol%]

Preparation:

Into a pressure-resistant container purged with nitrogen and dried, 55.8 kg of cyclohexane serving as a solvent, 59 ml of sec-butyllithium (10 mass%, cyclohexane solution) serving as an initiator, 99 g of N,N,N',N'-tetramethylethylenediamine serving as a Lewis base, 1.84 kg of styrene serving as a monomer to be polymerized, 8.57 kg of butadiene, and 1.84 kg of styrene were successively added to obtain a polystyrene-polybutadiene-polystyrene triblock copolymer. Palladium carbon (supported amount of palladium: 5 mass%) was added as a hydrogenation catalyst at 5 mass% to the copolymer to perform a hydrogenation reaction for 5 hours under the conditions of the hydrogen pressure of 2 MPa and 150 °C, which was followed by removal of the catalyst and drying to obtain a hydrogenated product of the polystyrene-polybutadiene-polystyrene triblock copolymer.

<Hydrocarbon Softener (b)>

Component (b-1)

Diana Process Oil PW-380 (trade name), manufactured by Idemitsu Petrochemical Co., Ltd.; paraffin oil; dynamic viscosity (40 °C): 381.6 $mm^2$/s; ring analysis paraffin: 73 %; ring analysis naphthene: 27 %; weight average molecular weight: 1304

Component (b-2)

Diana Process Oil PW-90 (trade name), manufactured by Idemitsu Petrochemical Co., Ltd.; paraffin oil; dynamic viscosity (40 °C): 95.5 $mm^2$/s; ring analysis paraffin: 71 %; ring analysis naphthene: 29 %; weight average molecular weight: 790

<Polyolefin Polymer (c)>

Component (c-1)

Polypropylene: Prime Polypro F219DA (trade name), manufactured by Prime Polymer Co. Ltd.; MFR (230 °C): 8.0 g/10 minutes

Component (c-2)

Polypropylene: Prime Polypro J108M (trade name), manufactured by Prime Polymer Co., Ltd., MFR (230 °C):

45 g/10 minutes

<Examples 1 to 11>

By using a twin-screw extruder (diameter: 46 mm, L/D=46), the constituent components described above were mixed in accordance with composition shown in Table 1 and then melted and kneaded at 190 °C to obtain pellet-shaped resin compositions. These resin compositions were discharged at a nozzle temperature of 290 °C into films, and the obtained films are punched to obtain sheets (perforated sheets) having numerous through-holes with predetermined average hole diameters and porosities. Double-sided tapes (acrylic adhesive: No. 53100, manufactured by Nitto Denko Corporation) were applied to both surfaces of these sheets having numerous through-holes to obtain adhesive-coated sheets. An adhesive layer on one side of each of the coated sheet was coated with thermoplastic polyurethane (TPU) leather to obtain a laminated sheet.

<Comparative Examples 1 and 2>

Multilayer sheets (laminated sheets) were obtained as in Example 1 in accordance with composition of resin shown in Table 1.

<Comparative Examples 3 and 4>

Laminated sheets were obtained as in Example 1 except that a polyethylene terephthalate film (PET, trade name: Lumirror S10) (Comparative Example 3) and a polyurethane film (TPU, trade name: Pandex T8180N, formed into film) were respectively used instead of the resin composition film of Example 1.

<Comparative Example 5>

A laminated sheet was obtained as in Example 1 except that a non-perforated film was used instead of the perforated sheet of Example 1.

<Comparative Example 6>

A laminated sheet was obtained as in Example 1 except that an elastomer nonwoven fabric (basis weight: 40 g/m$^2$, tan$\delta$: 1.2, melt-blown nonwoven fabric) prepared in accordance with Example 1 described in Japanese Laid-Open Patent Publication No. 2014-218764 (Patent Document 6) was used instead of the perforated sheet of Example 1.

Table 1 shows the results of Examples 1 to 12 and Comparative Examples 1 to 5.

[Table 1]

| | | | Examples | | | | | | | | | | | Comparative Examples | | | | | |
|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 1 | 2 | 3 | 4 | 5 | 6 |
| composition | a1-1 | parts by mass | | | 80 | | | | | 70 | | | | | 100 | (PET) (100) | (TPU) (100) | | 100 |
| | a1-2 | | 80 | 80 | | | 100 | 100 | 100 | | 80 | 80 | 80 | | | | | | |
| | a1-3 | | | | | 80 | | | | | | | | | | | | | |
| | a2-1 | | 20 | 20 | 20 | 20 | | | | | 20 | 20 | 20 | 100 | | | | 100 | |
| | a2-2 | | | | | | | | | 30 | | | | | | | | | |
| | b-1 | | | | | | 140 | | | | | | | 155 | | | | 155 | |
| | b-2 | | 10 | 10 | 10 | 10 | | 50 | 150 | 50 | 10 | 10 | 10 | | | | | | |
| | c-1 | | | | | | | | | | | 10 | 10 | | 67 | | | | |
| | c-2 | | | 7 | | | | 7 | 7 | 7 | | | | 50 | | | | 50 | |
| form | thermoplastic elastomer sheet thickness | mm | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | adhesive-coated sheet thickness | mm | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| | through-holes porosity | % | yes 35 | yes 35 | yes 35 | yes 35 | yes 35 | yes 35 | yes 35 | yes 35 | yes 5 | yes 55 | yes 75 | yes 35 | yes 35 | yes 35 | yes 35 | no 35 | no - |
| | average hole diameter | mm | 1 | 1 | 1 | 1 | 1 | 1 | 1 | 1 | 1 | 3 | 6 | 1 | 1 | 1 | 1 | 1 | 0 |
| performance | thermoplastic elastomer sheet tanδ (0 °C, 30 Hz) | - | 0.8 | 0.8 | 0.9 | 0.5 | 0.8 | 0.75 | 0.70 | 0.31 | 0.35 | 0.90 | 0.90 | 0.15 | 0.20 | 0.10 | 0.2 | 0.15 | 1.2 |
| | rebound resilience (time until stop) | sec | 10 | 10 | 10 | 11 | 10 | 10 | 10 | 12 | 11 | 8 | 7 | 16 | 16 | 17 | 16 | 16 | 10 |
| | adhesiveness | N/25mm | 30 | 30 | 31 | 30 | 31 | 30 | 30 | 31 | 30 | 35 | 40 | 30 | 31 | 31 | 30 | 15 | 17 |

(continued)

| | | Examples | | | | | | | | | | | Comparative Examples | | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 | 5 | 6 |
| numbing feeling of hands (five-grade evaluation) | - | 4 | 5 | 5 | 5 | 3 | 4 | 4 | 5 | 4 | 4 | 3 | 1 | 1 | 1 | 1 | 1 | 2 |

**EP 3 693 159 B1**

As shown in Table 1, all the vibration-controlling sheets of the present invention minimized the numbness of hands even when a strong impact is applied, while the effects exhibited in Comparative Examples 1 to 5 were smaller as compared to the present invention.

The vibration-controlling sheet of the present invention is extremely useful especially as a grip of a bat, a tennis racket, etc., since numbness of hands, feet, and a body is minimized even when a strong impact is applied. Furthermore, the present invention is applicable to daily goods/sporting goods such as gloves, protectors, and shoes, medical supplies such as corsets, supporters, and masks, and underwear such as brassieres and foundations, and diapers.

**Claims**

1. A vibration-controlling sheet comprising: a thermoplastic elastomer sheet having numerous through-holes; and an adhesive layer present on one or both sides of the thermoplastic elastomer sheet, wherein the thermoplastic elastomer sheet has a porosity of 5 to 80 % and a loss factor tanδ of 0.3 or more at 0 °C and 30 Hz, as measured in accordance with the respective methods specified in the description, and wherein the thermoplastic elastomer is a block copolymer (a) composed of at least two polymer blocks A made up of structural units derived from a vinyl aromatic compound and at least one polymer block B made up of structural units derived from a conjugated diene compound, and/or a hydrogenated product of the block copolymer.

2. The vibration-controlling sheet according to claim 1, wherein the block copolymer and/or a hydrogenated product of the block copolymer (a) is (a1) a block copolymer in which a content of 3,4-bond units and 1,2-bond units of structural units derived from isoprene and/or butadiene is 45 mol% or more, and/or a hydrogenated product of the block copolymer.

3. The vibration-controlling sheet according to claim 1, wherein the block copolymer and/or a hydrogenated product of the block copolymer (a) is made up of (a1) a block copolymer in which a content of 3,4-bond units and 1,2-bond units of structural units derived from isoprene and/or butadiene is 45 mol% or more, and/or a hydrogenated product of the block copolymer, and (a2) a block copolymer in which a content of 3,4-bond units and 1,2-bond units of structural units derived from isoprene and/or butadiene is less than 45 mol%, and/or a hydrogenated product of the block copolymer, and wherein a mass ratio of (a1) and (a2) is (a1):(a2)=95:5 to 30:70.

4. The vibration-controlling sheet according to any one of claims 1 to 3, wherein the thermoplastic elastomer contains 50 to 300 parts by mass of (b) a hydrocarbon softener, relative to 100 parts by mass of the block copolymer and/or a hydrogenated product of the block copolymer (a).

5. The vibration-controlling sheet according to claim 4, wherein the thermoplastic elastomer contains 3 to 50 parts by mass of (c) a polyolefin resin, relative to a total of 100 parts by mass of the block copolymer and/or a hydrogenated product of the block copolymer (a) and the hydrocarbon softener (b).

6. The vibration-controlling sheet according to any one of claims 1 to 5, wherein the through-holes have an average hole diameter of 0.1 mm to 8 mm.

7. The vibration-controlling sheet according to any one of claims 1 to 6, wherein the vibration-controlling sheet is a perforated sheet having a thickness of 0.1 to 7 mm.

**Patentansprüche**

1. Schwingungsdämpfendes Blatt, umfassend: ein Blatt aus thermoplastischem Elastomer, aufweisend eine Vielzahl von Durchgangslöchern; und eine Haftschicht, welche sich auf einer oder beiden Seiten des Blatts aus thermoplastischem Elastomer befindet, wobei das Blatt aus thermoplastischem Elastomer eine Porosität von 5 bis 80 % und einen Verlustfaktor tanδ von 0,3 oder mehr bei 0 °C und 30 Hz, gemessen in Übereinstimmung mit den jeweiligen in der Beschreibung angegebenen Verfahren, aufweist, und wobei das thermoplastische Elastomer ein Blockcopolymer (a), gebildet aus zumindest zwei Polymerblöcken A aus strukturellen Einheiten, abgeleitet von einer aromatischen Vinylverbindung, und zumindest einem Polymerblock B aus strukturellen Einheiten, abgeleitet von einer konjugierten Dienverbindung, und/oder ein hydriertes Produkt des Blockcopolymers ist.

2. Schwingungsdämpfendes Blatt nach Anspruch 1, wobei das Blockcopolymer und/oder ein hydriertes Produkt des

17

Blockcopolymers (a) (a1) ein Blockcopolymer, in welchem ein Gehalt von 3,4-Bindungseinheiten und 1,2-Bindungseinheiten von strukturellen Einheiten, abgeleitet von Isopren und/oder Butadien, 45 mol% oder mehr beträgt, und/oder ein hydriertes Produkt des Blockcopolymers ist.

3. Schwingungsdämpfendes Blatt nach Anspruch 1, wobei das Blockcopolymer und/oder ein hydriertes Produkt des Blockcopolymers (a) aus (a1) einem Blockcopolymer, in welchem ein Gehalt von 3,4-Bindungseinheiten und 1,2-Bindungseinheiten von strukturellen Einheiten, abgeleitet von Isopren und/oder Butadien, 45 mol% oder mehr beträgt, und/oder einem hydrierten Produkt des Blockcopolymers und (a2) einem Blockcopolymer, in welchem ein Gehalt von 3,4-Bindungseinheiten und 1,2-Bindungseinheiten von strukturellen Einheiten, abgeleitet von Isopren und/oder Butadien, weniger als 45 mol% beträgt, und/oder einem hydrierten Produkt des Blockcopolymers gebildet ist, und wobei ein Massenverhältnis von (a1) und (a2) (a1):(a2) = 95:5 bis 30:70 beträgt.

4. Schwingungsdämpfendes Blatt nach einem der Ansprüche 1 bis 3, wobei das thermoplastische Elastomer 50 bis 300 Massenteile von (b) einem Kohlenwasserstoffweichmacher, bezogen auf 100 Massenteile des Blockcopolymers und/oder eines hydrierten Produkts des Blockcopolymers (a), enthält.

5. Schwingungsdämpfendes Blatt nach Anspruch 4, wobei das thermoplastische Elastomer 3 bis 50 Massenteile von (c) einem Polyolefinharz, bezogen auf eine Gesamtheit von 100 Massenteilen des Blockcopolymers und/oder eines hydrierten Produkts des Blockcopolymers (a) und des Kohlenwasserstoffweichmachers (b), enthält.

6. Schwingungsdämpfendes Blatt nach einem der Ansprüche 1 bis 5, wobei die Durchgangslöcher einen mittleren Lochdurchmesser von 0,1 mm bis 8 mm aufweisen.

7. Schwingungsdämpfendes Blatt nach einem der Ansprüche 1 bis 6, wobei das schwingungsdämpfende Blatt ein perforiertes Blatt mit einer Dicke von 0,1 bis 7 mm ist.

**Revendications**

1. Feuille antivibrations comprenant : une feuille élastomère thermoplastique ayant de nombreux trous traversants ; et une couche adhésive présente sur l'un ou les deux côtés de la feuille élastomère thermoplastique, dans laquelle la feuille élastomère thermoplastique présente une porosité de 5 à 80 % et un facteur de perte $\tan\delta$ de 0,3 ou plus à 0 °C et 30 Hz, tels que mesurés selon les méthodes respectives spécifiées dans la description, et dans laquelle l'élastomère thermoplastique est un copolymère bloc (a) composé d'au moins deux blocs polymères A constitués d'unités structurelles dérivées d'un composé aromatique vinylique et d'au moins un bloc polymère B constitué d'unités structurelles dérivées d'un composé diène conjugué, et/ou un produit hydrogéné du copolymère bloc.

2. Feuille antivibrations selon la revendication 1, dans laquelle le copolymère bloc et/ou un produit hydrogéné du copolymère bloc (a) sont (a1) un copolymère bloc dans lequel une teneur en unités à 3,4 liaisons et en unités à 1,2 liaison d'unités structurelles dérivées d'isoprène et/ou de butadiène est 45 % en moles ou plus, et/ou un produit hydrogéné du copolymère bloc.

3. Feuille antivibrations selon la revendication 1, dans laquelle le copolymère bloc et/ou un produit hydrogéné du copolymère bloc (a) sont constitués de (a1) un copolymère bloc dans lequel une teneur en unités à 3,4 liaisons et en unités à 1,2 liaison d'unités structurelles dérivées d'isoprène et/ou de butadiène est 45 % en moles ou plus, et/ou un produit hydrogéné du copolymère bloc, et (a2) un copolymère bloc dans lequel une teneur en unités à 3,4 liaisons et en unités à 1,2 liaison d'unités structurelles dérivées d'isoprène et/ou de butadiène est moins de 45 % en moles, et/ou un produit hydrogéné du copolymère bloc, et dans laquelle un rapport massique de (a1) et (a2) est (a1):(a2)=95:5 à 30:70.

4. Feuille antivibrations selon l'une quelconque des revendications 1 à 3, dans laquelle l'élastomère thermoplastique contient 50 à 300 parties en masse de (b) un plastifiant d'hydrocarbure, par rapport à 100 parties en masse du copolymère bloc et/ou un produit hydrogéné du copolymère bloc (a).

5. Feuille antivibrations selon la revendication 4, dans laquelle l'élastomère thermoplastique contient 3 à 50 parties en masse de (c) une résine polyoléfine, par rapport à un total de 100 parties en masse du copolymère bloc et/ou d'un produit hydrogéné du copolymère bloc (a) et le plastifiant d'hydrocarbure (b) .

**6.** Feuille antivibrations selon l'une quelconque des revendications 1 à 5, dans laquelle les trous traversants présentent un diamètre moyen de trou de 0,1 mm à 8 mm.

**7.** Feuille antivibrations selon l'une quelconque des revendications 1 à 6, dans laquelle la feuille antivibrations est une feuille perforée présentant une épaisseur de 0,1 à 7 mm.

*Fig. 1*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 50014742 A
- JP 58206644 A
- JP 11148052 A
- JP 2016023521 A
- JP 2001348540 A
- JP 2014218764 A
- JP 2011111499 A
- US 2012164907 A1
- US 2003132057 A1
- JP H08258206 A
- WO 2011040586 A